# EUROPÄISCHE PATENTSCHRIFT

(11) **EP 0 689 729 B1**
(45) Veröffentlichungstag und Bekanntmachung des Hinweises auf die Patenterteilung: **18.12.1996**
(21) Anmeldenummer: 94908946.0
(22) Anmeldetag: 02.03.1994
(51) Int. Cl.: H02J 3/36, H02M 7/757, G05F 1/66

(54) **VERFAHREN UND REGELANORDNUNG ZUR GLEICHSTROMÜBERTRAGUNG**
PROCESS AND REGULATING ARRANGEMENT FOR D.C. TRANSMISSION
PROCEDE ET AGENCEMENT DE REGULATION POUR LA TRANSMISSION DE COURANT CONTINU

(30) Priorität: 16.03.1993 DE 4308363
(43) Veröffentlichungstag der Anmeldung: 03.01.1996
(73) Patentinhaber: SIEMENS AKTIENGESELLSCHAFT, 80333 München (DE)
(72) Erfinder: KARLECIK-MAIER, Franz, D-91315 Höchstadt (DE)
(86) Internationale Anmeldenummer: DE9400226
(87) Internationale Veröffentlichungsnummer: WO9422199

(56) Entgegenhaltungen:
- EP-A- 0 367 247
- AT-B- 372 555
- DE-A- 3 326 947
- US-A- 4 598 350

## Beschreibung

Die Erfindung bezieht sich auf ein Verfahren zur Gleichstromübertragung zwischen zwei Stromrichtern. Sie bezieht sich auch auf eine Regelanordnung für eine Gleichstromübertragung zwischen zwei Stromrichtern.

Zum Übertragen elektrischer Energie zwischen zwei Wechselspannungsnetzen wird unter anderem von der sogenannten Gleichstromübertragung Gebrauch gemacht. Dabei wird an das eine Wechselspannungsnetz ein Gleichrichter angeschlossen, der einen Gleichstrom erzeugt, welcher wiederum einem Wechselrichter zugeführt wird. Der Wechselrichter ist mit dem zweiten Wechselspannungsnetz verbunden. Auf diese Weise sind die beiden Wechselspannungsnetze über eine Gleichstromverbindung miteinander gekoppelt. Eine derartige Gleichstromübertragung ist z. B. aus der WO 92/22 118 bekannt. Die Energieflußrichtung kann dabei auch umkehrbar sein.

Für den Betrieb derartiger Anordnungen werden unterschiedliche Regelverfahren angewendet. Ein Beispiel hierfür ist das sogenannte Marginalstromverfahren, das auch aus der EP 0 197 352 B1 bekannt ist. Hierbei weisen Gleichrichter und Wechselrichter jeweils einen Stromregler auf, deren Kennlinien um einen Marginalstrom voneinander versetzt sind. Es ist dabei auch üblich, daß beide Stromrichter einen Spannungsregler aufweisen. Auf diese Weise ist jedem Stromrichter eine genau definierte Arbeitskennlinie für den Gleich- und Wechselrichter zugeordnet, welche jeweis einen Strom- und Spannungsast aufweist. Der Schnittpunkt der jeweiligen Arbeitskennlinien ergibt dann im Betrieb den Arbeitspunkt der Gesamtanordnung. Je nach momentaner Betriebssituation ist bei einer derartigen Anordnung immer nur ein Regler (Strom oder Spannung) aktiv. Die übrigen Regler sind nicht im Eingriff.

Der Erfindung liegt die Aufgabe zugrunde, ein Verfahren und eine Regelanordnung anzugeben, durch die das Regelverhalten bei einer Gleichstromübertragung verbessert wird. Des weiteren soll eine hierzu geeignete Regelanordnung angegeben werden.

Die Aufgabe wird erfindungsgemäß gelöst, durch ein Verfahren zur Gleichstromübertragung zwischen Stromrichtern, insbesondere für eine Hochspannungs-Gleichstrom-Übertragungsanlage, denen jeweils eine Regeleinrichtung zur Bildung ihrer jeweiligen Steuerwinkel zugeordnet ist, wobei
- ausgehend von einem zu einem gemeinsamen Arbeitspunkt der zu übertragenden Leistung gehörenden vorgebbaren Stromund Spannungswert jedes Stromrichters jeder Regeleinrichtung jeweils eine zweidimensionale Regelabweichung vom Arbeitspunkt zugeführt wird, wobei
- zur Erreichung des Arbeitspunktes in Minimierung jeder zweidimensionalen Regelabweichung die jeweiligen Steuerwinkel der Stromrichter nachgeführt werden und wobei
- die Minimierung der zweidimensionalen Regelabweichung für beide Dimensionen der Regelabweichung gleichzeitig erfolgt.

Durch die Erfindung wird eine wesentliche Verbesserung des Regelverhaltens der Gleichstromübertragung erzielt, wobei die Dynamik erhöht ist. Die Gleichstromübertragung ist in bezug auf harmonische Oberschwingungen und Instabilitäten wesentlich unempfindlicher gegenüber früher, womit eine Erhöhung der Stabilität in der Übertragung erreicht wird. Vorteilhafte Ausgestaltungen des erfindungsgemäßen Verfahrens sind in den Ansprüchen 2 bis 4 angegeben.

Die jeweiligen Regelabweichungen werden als zumindest zweidimensionale Größe, insbesondere als vektorielle oder komplexe Größe, vorgegeben. Als Regelgrößen kommen zweckmäßigerweise Strom und Spannung zur Anwendung. Mit Vorteil werden die Werte für den Arbeitspunkt von einer zu übertragenden Leistung abgeleitet. Damit braucht nur ein Wert als Sollvorgabe für den Arbeitspunkt vorgegeben werden. Diese jeweiligen Ausgestaltungen ermöglichen auf einfache Art und weise mit vorhandenen Regelgrößen die Gleichstromübertragung nochmals zu verbessern.

Eine weitere Lösung der Aufgabe gelingt erfindungsgemäß mit Regelanordnung zur Durchführung des obengenannten Verfahrens für eine Gleichstromübertragung zwischen Wechselstromnetzen, mittels Stromrichtern, wobei
- jeder Steuereinrichtung der Stromrichter eine Regeleinrichtung zur Bildung eines Steuerwinkels vorgeschaltet ist,
- jeder Regeleinrichtung eine zweidimensionale Regelabweichung von einem gemeinsamen Arbeitspunkt der zu übertragenden Leistung mit einem jeweils vorgebbaren Strom- und Spannungswert zugeführt ist,
- wobei jede Regeleinrichtung in Minimierung jeder zweidimensionalen Regelabweichung den jeweiligen Steuerwinkel nachführt und
- wobei die Minimierung für beide Komponenten der zweidimensionalen Regelabweichung (ΔAa,ΔAb) gleichzeitig erfolgt.

Mit dieser einfachen Reglerstruktur ist die Realisierung einer Vektorregelung für eine Stromrichterstation einer Gleichstromübertragung möglich. Der Aufbau der Regleranordnung ist dabei verblüffend einfach.

In einer vorteilhaften Ausgestaltung weist die Regelanordnung für jeden Stromrichter jeweils zwei Regler auf, denen jeweils zugeordnete Komponenten einer zweidimensionalen Regelabweichung zur einem gemeinsamen Arbeitspunkt zugeführt werden wobei deren Ausgangssignale zur Bildung des Steuerwinkels von einem Addierer verknüpft sind. Alternativ hierzu können auch die zweidimensionalen Regelabweichungen zunächst addiert und dann einem Regler zur Bildung der Steuerwinkel zugeführt werden, Auf diese Weise ist mit wenigen Bauteilen ein einfacher Aufbau der Regelanordnung gegeben, Diese Regelanordnungen werden bevorzugt als Vektorregler eingesetzt. Sie besitzen ein schnelles Regelverhalten, wodurch eine verbesserte Dynamik im Regelfall gegeben ist.

Die Erfindung ist mit Vorteil sowohl in analoger Technik als auch in digitaler Technik mit einem Programm und einem Rechner realisierbar. Auch ist die Gleichstromübertragung nicht auf zwei Stromrichterstationen beschränkt. Sie kann auch eine Vielzahl von Stromrichtern für einen Mehrpunktbetrieb umfassen.

Die Erfindung und weitere Vorteile werden nachfolgend anhand von Ausführungsvarianten und der Zeichnung beispielhaft näher erläutert. Es zeigen:
- FIG 1: eine erste Anordnung zur Gleichstromübertragung;
- FIG 2: eine zweite Anordnung zur Gleichstromübertragung;
- FIG 3: eine dritte Anordnung zur Gleichstromübertragung;
- FIG 4 und 5: Regeleinrichtungen zur Verwendung in den Anordnungen gemäß FIG 1 bis 3, und
- FIG 6: ein Diagramm zum Arbeitspunkt der Anordnung.

Die Indexbuchstaben a und b kennzeichnen in den folgenden Ausführungen jeweils die Gleichrichter- bzw. Wechselrichterseize. Soweit nicht unbedingt erforderlich, werden nur die allgemeinen Bezugszeichen ohne Indexbuchstaben aufgeführt.

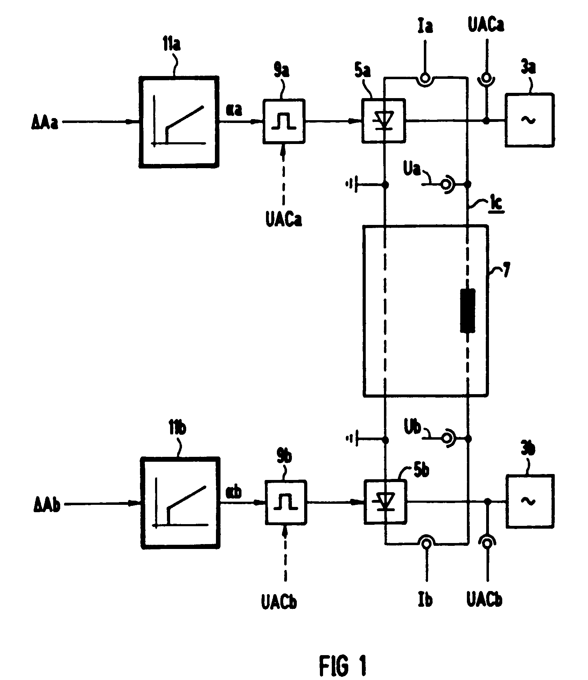

FIG 1 zeigt eine prinzipielle Anordnung 1c zur Gleichstromübertragung, bei der ein erstes und ein zweites Wechseloder Drehstromnetz 3a bzw. 3b miteinander verbunden sind. Die Anordnung 1c weist dazu zwei Stromrichter 5a, 5b auf, die gleichstromseitig über eine Gleichstromverbindung 7 miteinander verbunden sind. Drehstromseitig sind die beiden Stromrichter 5a, 5b jeweils mit einem der Drehstromnetze 3a, 3b verbunden. Die Anordnung 1c weist an vorgegebenen Stellen nicht naher bezeichnete Meßfühler zum Bilden der Strom- und Spannungsmeßwerte Ia, Ib bzw. Ua, UACa, Ub, UACb auf.

Je nach Ausbildung der Gleichstromverbindung 7 kann die gesamte Anordnung 1c z. B. als Kurzkupplung oder auch als Langstreckenübertragung (Long-Distance-Transmission) ausgebildet sein. Dies betrifft insbesondere die Anwendung bei Hochspannungs-Gleichstrom-Übertragungsanlagen (HGÜ), die zum Koppeln von Energienetzen dienen. In den nachfolgenden Ausführungen soll davon ausgegangen werden, daß ein Energietransport vom Drehstromnetz 3a zum Drehstromnetz 3b erfolgt. Dabei dient der eine Stromrichter 5a als Gleichrichter 5a und der Stromrichter 5b als Wechselrichter 5b. Selbstverständlich ist auch eine Energieumkehr möglich. Die nachfolgenden Ausführungen sind für wechselnde Energierichtungen sinngemäß anwendbar.

Jedem Stromrichter 5a, 5b ist eine Steuereinrichtung 9a bzw. 9b zugeordnet, welcher gegebenenfalls der Spannungsmeßwert UACa bzw. UACb und von einer Regeleinrichtung 11a bzw. 11b ein zugehöriges Steuersignal, nämlich ein Steuerwinkel αa bzw. αb, zugeführt wird.

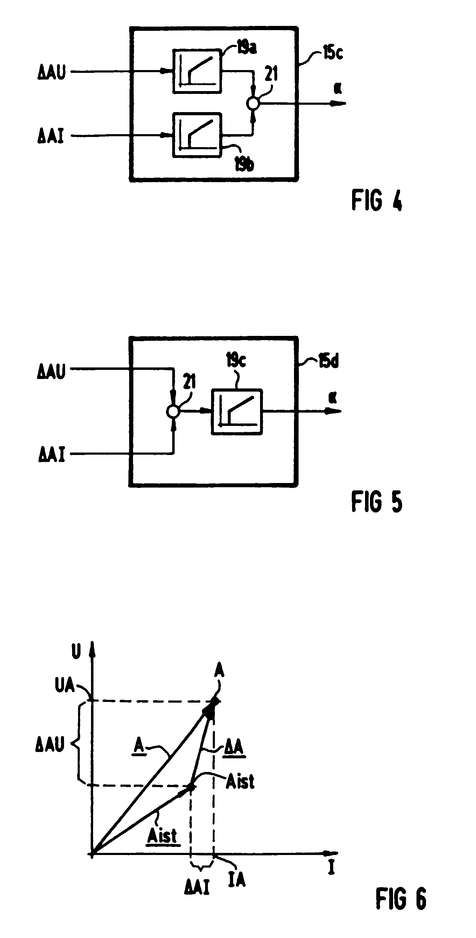

Ausgehend von dieser Konfiguration ist es für den Betrieb der Anordnung 1c wesentlich, daß die beiden Stromrichter 5a, 5b im stationären Betrieb, z. B. bei einer vorgegebenen zu übertragenden Leistung P, aufeinander eingestellt sind, um einen möglichst verlustfreien und gleichzeitig stabilen Betrieb zu ermöglichen. Sie sind dazu auf einen gemeinsamen Arbeitspunkt A eingestellt, der in FIG 6 in einem Strom-Spannungsdiagramm I/U gezeigt ist. Dieser Arbeitspunkt A gilt für den Idealzustand, das heißt bei einer verlustfreien Gleichstromverbindung 7. Real ergeben sich jedoch zwei Arbeitspunkte, die der Fachmann aufgrund der Anlagenverhältnisse kennt und vorgibt. Der gemeinsame Arbeitspunkt A beschreibt ausgehend von der zu übertragenden Leistung P den Strom IA und die Spannung UA für die Gleichstromverbindung 7 (siehe hierzu auch die nachfolgende Beschreibung zu FIG 6).

Die zu übertragende Leistung P ist in der Regel ein Wert, der fest vorgegeben und allenfalls in großen Zeitabständen geändert wird. In der Praxis wird dieser Wert beispielsweise bei einer Langstreckenübertragung durch telefonische Nachrichtenübertragung von einer Stromrichterstation zur anderen, beispielsweise vom Gleichrichter 5a zum Wechselrichter 5b, weitergegeben. Die Leistung P stellt daher sozusagen die stationäre Betriebsleistung dar.

Vorliegend wird nun dieser Arbeitspunkt A als zweidimensionale Größe betrachtet, der von beiden Stromrichtern 5a und 5b im Zusammenwirken angefahren werden soll. Dazu wird den Regeleinrichtungen 11a bzw. 11b eine mehrdimensionale Regelabweichung ΔA, speziell ΔAa bzw. ΔAb, zugeführt. Mit dieser vektoriellen Betrachtungsweise wird erreicht, daß der jeweilige Stromrichter 5a bzw. 5b möglichst auf direktem Wege den Arbeitspunkt A erreicht und somit schnellstmöglich den Betrieb beim Arbeitspunkt aufnimmt. Obwohl jeder Stromrichter 5a, 5b für sich autark den Arbeitspunkt A ansteuert, steht dies unter dem Gesamtziel gemeinsam den Arbeitspunkt A zu erreichen. Es findet also eine gemeinsame Annäherung statt, wobei immer beide Stromrichter 5a, 5b einen Beitrag leisten. Es ist dabei zumindest immer ein Regeleingriff bei beiden Stromrichtern 5a, 5b gleichzeitig vorhanden, gegenüber nur einem beim Stand der Technik.

Zur näheren Erläuterung dieser Arbeitsweise wird auf das Diagramm in FIG 6 verwiesen. Dort ist im Strom-Spannungs-Diagramm I/U der vorgegebene Arbeitspunkt A gezeigt, den es zu erreichen gilt. Der momentane Arbeitspunkt ist mit Aist bezeichnet. Diese zwei Arbeitspunkte sind als vektorielle Größen mit A und Aist dargestellt. Aus der Differenz dieser beiden Vektoren ergibt sich der Regelabweichungsvektor ΔA. Die Projektion dieses vektors ΔA erzeugt die Regelabweichungen ΔAU und ΔAI, die den Regelabweichungen eines Strombzw. Spannungsreglers in der herkömmlichen Technik entsprechen. Um den Arbeitspunkt A (durch Nachführen der Stromrichtersteuersignale) zu erreichen, ist es erforderlich, daß der Betrag der Regelabweichung ΔA, also |ΔA|, auf Null geregelt wird, d.h. ΔAU und ΔAI müssen gleichzeitig Null sein. Daraus ergibt sich, daß diese Regelaufgabe wahlweise mit ein oder zwei Reglern ausgeführt werden kann. Ausgestaltungen derartiger Regler sind in der Beschreibung zu den Figuren 4 und 5 näher erläutert.

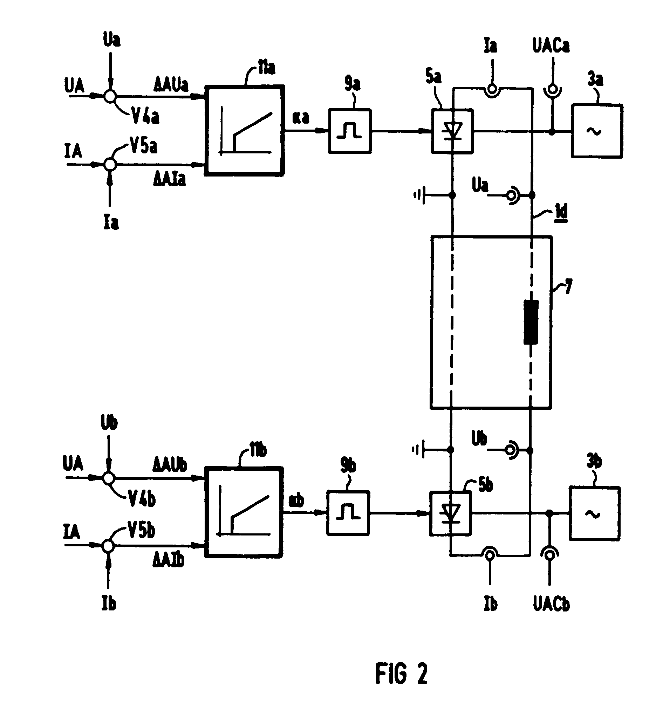

FIG 2 zeigt eine weitere Anordnung 1d, bei der die allgemeinen Regelabweichung ΔA je Stromrichterzweig zweidimensional mit ΔAI und ΔAU vorgegeben sind. Diese Regelabweichungen ΔAI und ΔAU werden durch Bilden der Differenz zwischen den tatsächlich gemessenen Größen am Stromrichter 5a, 5b, nämlich Ua, Ia bzw. Ub, Ib, und der sich aus dem Arbeitspunkt A rechnerisch ergebenden Werte für UA und IA mittels Vergleichern V4a,V5a bzw. V4b, V5b ermittelt. Selbstverständlich ist die Vorgabe der zweidimensionalen Größe auch auf andere Art und Weise möglich, z. B. als Vektor oder komplexe Größe. Die vorliegenden Werte ΔAU und ΔAI können auch als Projektion der vektoriellen Abweichung zum Arbeitspunkt A bezeichnet werden. Die Regeleinrichtungen 11a, 11b können daher sozusagen als Vektorregler oder Vektorregeleinrichtung bezeichnet werden.

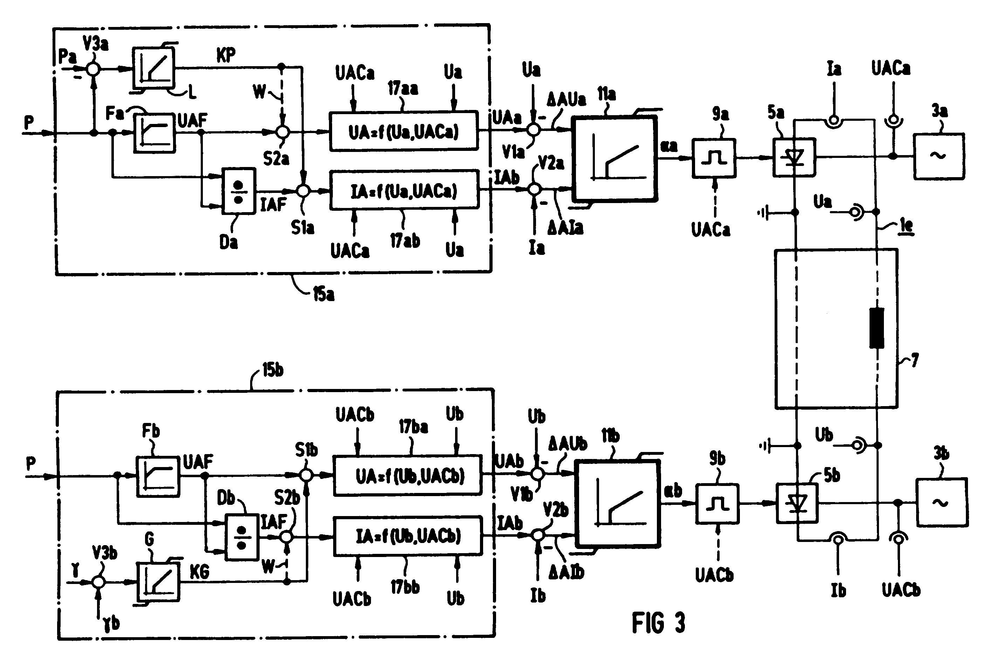

FIG 3 zeigt eine weitere Anordnung le, bei der aufbauend auf der Anordnung 1d gemäß FIG 2 den jeweiligen Regeleinrichtungen 11a und 11b Regelanordnungen 15a bzw. 15b vorgeschaltet sind. Diese dienen im wesentlichen dazu, um ausgehend von der zu übertragenden Leistung P und unter Berücksichtigung von aktuellen Betriebszuständen auf der Gleichstromverbindung 7 und/oder in den Drehstromnetzen 3a und 3b schnellstmöglich einen gemeinsamen Arbeitspunkt A zu erreichen. Zunächst wird hierzu nachfolgend die Meßwertverarbeitung für die Gleichrichterseite beschrieben. Ausgehend von der vorgegebenen Leistung P werden in der Regelanordnung 15a die festen Werte für Strom und Spannung IAF und UAF mittels eines Funktionsgebers Fa und eines Dividierers Da ermittelt. Die aktuell gemessene Leistung Pa, die nicht näher gezeigt je Stromricherzweig aus den vorort vorhandenen Strom- und Spannungsmeßwerten Ia, Ua bzw. Ib, Ub ermittelt wird, wird mit der Leistung P im Vergleicher V3a verglichen. Das Ausgangssignal des Vergleichers V3a wird einem Leistungsregler L zugeführt. Dieser liefert einen Korrekturwert KP zur Einflußnahme über Summierer S1a und wahlweise S2a auf die festen Werte IAF und/oder UAF. Nachgeschaltete Strategieglieder 17aa und 17ab beinhalten Funktionen, insbesondere Verfahrensweisen und Taktiken, wie beispielsweise in Fehlerfällen oder in abweichenden Betriebszuständen zu verfahren ist. Den Strategiegliedern 17aa und 17ab werden dazu jeweils die aktuellen Gleich- und Wechselspannung Ua bzw. UACa des Gleichrichters 5a zugeführt. Dies ist besonders wichtig für die Behandlung von Fehlerfällen, bei denen besonders schnell reagiert werden muß. Im Fehlerfall wird nämlich quasi ein neuer Arbeitspunkt für die Stromrichter 5a, 5b definiert, der schnellstmöglich erreicht werden soll. Auf diese Weise ist die neue arbeitspunktorientierte Verfahrensweise auch zum Beherrschen von kritischen Betriebszuständen oder auch zum Wechsel von Arbeitspunkten unter besonderen Bedingungen äußert wirkungsvoll.

Bevorzugt können in den Strategiegliedern 17aa, 17ab selbstverständlich auch weitere Einflußgrößen oder Betriebsmeßwerte der jeweiligen Stromrichter 5a bzw. 5b, ggf. auch der Gegenstation, aufgenommen werden und nach gewichteten Gesichtspunkten verarbeitet werden. Hierbei finden beispielsweise auch Fuzzy-Glieder Anwendung. Diese zeichnen sich in speziellen Fällen als besonders schnell aus, wofür sie insbesondere für Fehlerstrategien hervorragend geeignet sind. Auch ist eine neuronale Verfahrensweise denkbar, so daß die gesamte Regelung quasi selbstlernend ist und daher wiederkehrende Betriebssituationen besser beherrscht werden. Die Regelanordnung 15a liefert an ihren Ausgängen die für die Vektorregelung benötigten Werte UAa und IAa.

Die Meßwertverarbeitung für den Wechselrichter 5b, in der Regelanordnung 15b erfolgt bezüglich der festen Werte UAF und IAF analog zur oben geschilderten Verarbeitung beim Gleichrichter 5a. Hier wird jedoch statt der tatsächlich gemessenen Leistung Pa die Differenz zwischen einem vorgegebenen Löschwinkel γ und dem tatsächlichen Löschwinkel γb im Gammaregler G verarbeitet. Der Löschwinkel γb wird wie nicht näher gezeigt, ebenfalls aus den jeweiligen Stromund Spannungsmeßwerten Ib, Ub oder UACb ermittelt. Die weitere Meßwertverarbeitung erfolgt sinngemäß wie oben beim Gleichrichter 5a beschrieben.

Alternative oder zusätzliche Verknüpfungen der einzelnen Bausteine oder Regelglieder sind mit den Verbindungen W angedeutet, die der Fachmann bei Bedarf vorsehen kann. Bei der vorliegenden Konfiguration gemäß FIG 3 wird der feste Arbeitspunktstrom IAF des Gleichrichters mit einem Korrekturwert KP des übergeordneten Leistungsreglers L (unter Zuführung von Pa) verknüpft, der dafür sorgt, daß die gewünschte Leistung übertragen wird.

Die feste Arbeitspunktspannung UAF des Wechselrichters wird von einem überlagerten Gammaregler G (unter Zuführung von γb) ebenfalls über ein Korrektursignal KG so verändert, daß sich der gewünschte Löschwinkel einstellt. Über die überlagerten Regelsysteme am Gleichrichter - Leistungsregler + Vektorregler und am Wechselrichter - γ-Regler + Vektorregler - wird erreicht, daß die gewünschte Leistung P bei höchstem Wirkungsgrad übertragen wird.

Die Figuren 4 und 5 zeigen Reglerausführungen 15c, 15 d, wie sie in den Regeleinrichtungen 11a und 11b in FIG 2 und 3 als Vektorregler zur Anwendung kommen können. Sie können auch sinngemäß ohne ihre Regler 19a, 19b, 19c den Regeleinrichtungen 11a, 11b in FIG 1 vorgeschaltet sein, so daß die gleiche Funktion erzielt wird.

Die Ausführung gemäß FIG 4 weist zwei Regler 19a und 19b auf, welchen jeweils eine Regelabweichung ΔAU bzw. ΔAI zugeführt werden. Ihre Ausgangssignale werden miteinander mittels eines Addierers 21 verknüpft, so daß ein Steuerwinkelsignal α erzeugt wird. Diese Ausführung ist nur in bestimmten Fällen anwendbar. Die Ausführung gemäß FIG 5 zeichnet sich dadurch aus, daß nur ein Regler 19c benötigt wird. In der Praxis hat sich gezeigt, daß diese Ausführung auch in Sonderfällen wesentlich besser und insbesondere schneller arbeitet.

Zur Vervollständigung sind nachfolgend alle in den Figuren verwendeten Bezugszeichen mit Erläuterungen aufgeführt:
- 1c, 1d, 1e: Anordnung
- 3a, 3: erstes und zweites Drehstromnetz
- 5a, 5b: Stromrichter (Gleich- bzw. Wechselrichter)
- 7: Gleichstromverbindung
- 9a, 9b: Steuereinrichtung
- 11a, 11b: Regeleinrichtung
- 15a, 15b, 15c, 15d: Regelanordnung
- 17aa, 17ab, 17ba, 17bb: Strategieglieder
- 19a, 19b, 19c: Regler
- 21: Addierer
- α: Steuerwinkelsignal
- αa, αb: Steuerwinkel
- A: Arbeitspunkt
- Ua, Ub: Spannungsmeßwert
- Ia, Ib: Strommeßwert
- Pa, Pb: gemessene Leistung
- P: vorgegebene Leistung
- ΔA, ΔAa, ΔAb, ΔAU, ΔAUa, ΔAUb, ΔAI, ΔAIa, ΔAIb: Regelabweichungen
- UA, UAa, UAb: Arbeitspunktspannung
- IA, IAa, IAb: Arbeitspunktstrom
- UACa, UACb: Wechselspannungsmeßwert
- IACa, IACb: Wechselstrommeßwert
- γ: vorgegebener Löschwinkel
- γb: gemessener Löschwinkel
- W: Verbindungen, Wirkungslinien
- UAF: feste Arbeitspunktspannung
- IAF: fester Arbeitspunktstrom
- KG, KP: Korrekturwert
- L: Leistungsregler
- G: Gammaregler
- Fa, Fb: Funktionsgeber
- S1a, S1b, S2a, S2b: Summierer
- V1a, V2a, V3a, V1b, V2b,V3b: Vergleicher
- Da, Db: Dividierer

## Patentansprüche

1. Verfahren zur Gleichstromübertragung zwischen Stromrichtern (5a,5b), insbesondere für eine Hochspannungs-Gleichstrom-Übertragungsanlage, denen jeweils eine Regeleinrichtung (11a,11b) zur Bildung ihrer jeweiligen Steuerwinkel (αa, αb) zugeordnet ist, wobei
- ausgehend von einem zu einem gemeinsamen Arbeitspunkt (A) der zu übertragenden Leistung (P) gehörenden vorgebbaren Strom- und Spannungswert (UA und IA) jedes Stromrichters jeder Regeleinrichtung (11a,11b) jeweils eine zweidimensionale Regelabweichung (ΔAa bzw. ΔAb) vom Arbeitspunkt (A) zugeführt wird, wobei
- zur Erreichung des Arbeitspunktes (A) in Minimierung jeder zweidimensionalen Regelabweichung (ΔAa und ΔAb) die jeweiligen Steuerwinkel (αa, αb) der Stromrichter (5a,5b) nachgeführt werden und wobei
- die Minimierung der zweidimensionalen Regelabweichung (ΔAa, ΔAb) für beide Dimensionen der Regelabweichung (ΔAa, ΔAb) gleichzeitig erfolgt.

2. Verfahren nach Anspruch 1, wobei die jeweiligen zweidimensionalen Regelabweichungen (ΔAa, ΔAb) als vektorielle oder komplexe Größe vorgegeben werden.

3. Verfahren nach Anspruch 1 oder 2, wobei die jeweiligen zweidimensionalen Regelabweichungen (ΔAa,ΔAb) durch Vorgabe der Spannungs- und Stromabweichungen (ΔAU, ΔAUa, ΔAUb und ΔAI, ΔAIa, ΔAIb) vorgegeben werden.

4. Verfahren nach einem der vorhergehenden Ansprüche, wobei jede Regelabweichung (ΔAa, ΔAb) aus den jeweiligen aktuellen Strom- und Spannungsmeßwerten (Ua,Ia,Ub,Ib) und den vorgegebenen Strom- und Spannungswerten (UAa,IAa,UAb,IAb) gebildet wird.

5. Regelanordnung zur Durchführung des Verfahrens nach Anspruch 1 zur eine Gleichstromübertragung zwiscnen Wechselstromnetzen (3a,3b), mittels Stromrichtern (5a,5b), wobei
- jeder Steuereinrichtung (9a,9b) der Stromrichter (5a,5b) eine Regeleinrichtung (11a,11b) zur Bildung eines Steuerwinkels (α,αa,αb) vorgeschaltet ist,
- jeder Regeleinrichtung (11a,11b) eine zweidimensionale Regelabweichung (ΔAa,ΔAb) von einem gemeinsamen Arbeitspunkt (A) der zu übertragenden Leistung (P) mit einem jeweils vorgebbaren Strom- und Spannungswert (UA,IA) zugeführt ist,
- wobei jede Regeleinrichtung (11a,11b) in Minimierung jeder zweidimensionalen Regelabweichung (ΔAa,ΔAb) den jeweiligen Steuerwinkel (αa,αb) nachführt und
- wobei die Minimierung für beide Komponenten (ΔAU,ΔAI) der zweidimensionalen Regelabweichung (ΔAa,ΔAb) gleichzeitig erfolgt.

6. Regelanordnung nach Anspruch 5, wobei jeweils zwei Reglern (19a,19b) die jeweils zugeordneten Komponenten der zweidimensionalen Regelabweichung (ΔAU,ΔAI) vom gemeinsamen Arbeitspunkt (A) zugeführt und deren Ausgangssignale zur Bildung des Steuerwinkels (αa,αb) von einem Addierer (21) verknüpft sind.

7. Regelanordnung nach Anspruch 5, wobei einem Regler (19c) ein Addierer (21) vorgeschaltet ist, dem die Komponenten der zweidimensionalen Regelabweichungen (ΔAU, ΔAI) vom gemeinsamen Arbeitspunktes (A) zugeführt sind und wobei der Regler (19c) den Steuerwinkel (αa,αb) bildet.

## Claims

1. Method for DC transmission between converters (5a, 5b), in particular for a high-voltage DC transmission system, to which converters there is respectively assigned a control device (11a, 11b) for forming their respective control angles (α, αb), in which method:
- starting from a prescribable current and voltage value (UA and IA), belonging to a common working point (A) of the power (P) to be transmitted, of each converter, each control device (11a, 11b) is respectively fed a two-dimensional system deviation (ΔAa and ΔAb, respectively) from the working point (A), it being the case that
- the respective control angles (αa, αb) of the converters (5a, 5b) are followed up in order to reach the working point (A), minimizing each two-dimensional system deviation (ΔAa and ΔAb), and that
- the minimizing of the two-dimensional system deviation (ΔAa, ΔAb) is performed simultaneously for both dimensions of the system deviation (ΔAa, ΔAb).

2. Method according to Claim 1, in which the respective two-dimensional system deviations (ΔAa, ΔAb) are prescribed as vectorial or complex variables.

3. Method according to Claim 1 or 2, in which the respective two-dimensional system deviations (ΔAa, ΔAb) are prescribed by prescribing the voltage and current deviations (ΔAU, ΔAUa, ΔAUb and ΔAI, ΔAIa, ΔAIb).

4. Method according to one of the preceding claims, in which each system deviation (ΔAa, ΔAb) is formed from the respective up-to-date measured current and voltage values (Ua, Ia, Ub, Ib) and the prescribed current and voltage values (UAa, IAa, UAb, IAb).

5. Control arrangement for carrying out the method according to Claim 1 for DC transmission between AC networks (3a, 3b), by means of converters (5a, 5b), in which
- connected upstream of each controlling system (9a, 9b) of the converters (5a, 5b) is a control device (11a, 11b) for forming a control angle (α, αa, αb),
- each control device (11a, 11b) is fed a two-dimensional system deviation (ΔAa, ΔAb) from a common working point (A) of the power (P) to be transmitted with a respectively prescribable current and voltage value (UA, IA),
- each control device (11a, 11b) following up the respective control angle (αa, αb), minimizing each two-dimensional system deviation (ΔAa, ΔAb), and
- the minimizing being performed simultaneously for both components (ΔAU, ΔAI) of the two-dimensional system deviation (ΔAa, ΔAb).

6. Control arrangement according to Claim 6, in which in each case two controllers (19a, 19b) are fed the respectively assigned components of the two-dimensional system deviation (ΔAU, ΔAI) from the common working point (A), and their output signals are combined by an adder (21) to form the control angle (αa, αb).

7. Control arrangement according to Claim 5, in which connected upstream of one controller (19c) is an adder (21) to which the components of the two-dimensional system deviations (ΔAU, ΔAI) from the common working point (A) are fed, the controller (19c) forming the control angle (αa, αb).

## Revendications

1. Procédé de transport de courant continu entre convertisseurs de courant (5a, 5b), notamment pour une installation de transport de courant continu à haute tension, auxquels est associé un dispositif régulateur (11a, 11b) pour la formation de leurs angles de commande (αa, αb) correspondants, dans lequel
- on envoie à partir d'une valeur de courant et d'une valeur de tension (UA et IA) de chaque convertisseur de courant, pouvant être prescrites et appartenant à un point de fonctionnement (A) commun de la puissance (P) à transmettre, un écart bidimensionnel de réglage (respectivement ΔAa, ΔAb), par rapport au point de fonctionnement (A), à chaque dispositif régulateur (11a, 11b),
- pour atteindre le point de fonctionnement (A), avec une minimisation de chaque écart bidimensionnel de réglage (ΔAa et ΔAb), on suit les angles de commande (αa, αb) correspondants des convertisseurs de courant (5a, 5b)
- on effectue la minimisation de l'écart bidimensionnel de réglage (ΔAa, ΔAb) simultanément pour les deux dimensions de l'écart de réglage (ΔAa, ΔAb).

2. Procédé selon la revendication 1, dans lequel on prescrit les écarts bidimensionnels de réglage (ΔAa, ΔAb) en tant que grandeurs vectorielles ou complexes.

3. Procédé selon la revendication 1 ou 2, dans lequel on prescrit les écarts bidimensionnels de réglage (ΔAa, ΔAb) par prescription des écarts de tension et de courant (ΔAU, ΔAUa, ΔAUb et ΔAI, ΔAIa, ΔAIb).

4. Procédé selon l'une des revendications précédentes, dans lequel on forme chaque écart de réglage (ΔAa, ΔAb) à partir des valeurs actuelles mesurées de courant et de tension (Ua, Ia, Ub, Ib) et des valeurs prescrites de courant et de tension (UAa, IAa, UAb, IAb).

5. Montage régulateur pour la mise en oeuvre du procédé selon la revendication 1, pour un transport de courant continu entre réseaux à courant alternatif (3a, 3b), au moyen de convertisseurs de courant (5a, 5b), dans lequel
- un dispositif régulateur (11a, 11b) pour la formation d'un angle de commande (α, αa, αb), est monté en amont de chaque dispositif de commande (9a, 9b) des convertisseurs de courant (5a, 5b),
- un écart bidimensionnel de réglage (ΔAa, ΔAb), par rapport à un point de fonctionnement (A) commun de la puissance (P) à transporter, ayant une valeur de courant et une valeur de tension (UA, IA), pouvant être prescrites, est envoyé à chaque dispositif régulateur (11a, 11b),
- dans lequel chaque dispositif régulateur (11a, 11b) suit l'angle de commande (αa, αb), avec une minimisation de l'écart bidimensionnel de réglage (ΔAa, ΔAb), et
- dans lequel la minimisation pour les deux composantes (ΔAU, ΔAI) de l'écart bidimensionnel de réglage (ΔAa, ΔAb) s'effectue simultanément.

6. Montage régulateur selon la revendication 5, dans lequel les composantes associées de l'écart bidimensionnel de réglage (ΔAU, ΔAI) , par rapport à un point de fonctionnement (A) commun, sont envoyées à deux régulateurs (19a, 19b), dont les signaux de sortie sont combinés par un additionneur (21) pour la formation de l'angle de commande (αa, αb).

7. Montage régulateur selon la revendication 5, dans lequel un additionneur (21), est monté en amont d'un régulateur (19c), auquel les composantes des écarts bidimensionnels de réglage (ΔAU, ΔAI) , par rapport au point de fonctionnement (A) commun sont envoyées, et dans lequel le régulateur (19c) forme l'angle de commande (αa, αb).
